# EUROPEAN PATENT SPECIFICATION

(11) **EP 1 490 210 B1**
(45) Date of publication and mention of the grant of the patent: **12.10.2005**
(21) Application number: 02718435.7
(22) Date of filing: 29.03.2002
(51) Int. Cl.: B29D 30/66

(54) **METHOD AND APPARATUS FOR MANUFACTURING A STUDDED TYRE**
VERFAHREN UND VORRICHTUNG ZUR HERSTELLUNG EINES SPIKE-REIFENS
PROCEDE ET DISPOSITIF POUR LA FABRICATION D'UN PNEU CLOUTE

(43) Date of publication of application: 29.12.2004
(73) Proprietor: PIRELLI PNEUMATICI S.p.A., 20126 Milano (IT)
(72) Inventor: BRIVIO, Fiorenzo, I-20044 Bernareggio (IT); CAZZANTI, Stefano, I-26100 Cremona (IT); CORNO, Giuseppe, I-20040 Usmate (IT)
(74) Representative: Bottero, Claudio
(86) International application number: PCT/IB2002/001020
(87) International publication number: WO 2003/082555

(56) References cited:
- EP-A- 0 693 364
- EP-A- 1 055 509
- DE-A- 2 648 863
- FR-A- 2 598 958
- US-A- 3 237 670

## Description

The present invention relates to a method for manufacturing a studded tyre.

A studded tyre for a vehicle wheel is particularly suitable for driving on icy surfaces and has a tread band containing a plurality of studs partially projecting from the radially outer surface of the said tread band. The tread band usually has a tread pattern suitable for use on snow-covered surfaces. It consists of a plurality of longitudinal and transverse grooves that define a corresponding plurality of blocks or ribs in which the abovementioned studs are inserted and from which they partially project: a studded tyre normally has around 200/400 studs.

In their usual form, studs basically consist of a rigid body, preferably made of steel, comprising a cylindrical or double-conical rod possessing, at the end that is to come into contact with the road, a tip made of a very hard material such as a tungsten carbide-based alloy, and at the other end an enlarged base to hold the stud in the tread band.

In one method for manufacturing studded tyres, the studs are fixed in the tread band after the tyre has been cured. More precisely this method consists in making holes in predetermined places in the tread band for the seats that are to contain the actual studs. The studs are placed in these seats in such a way that the end designed to contact the road projects from the said band to a predetermined distance. The optional presence of adhesive inside each seat and the shape of each stud, in which the diameter of the base is greater than the rod, work together to hold the stud in position during use.

In more recent techniques, methods have been developed in which a studded tyre is produced by fixing the studs to the tread band during curing. For example, document EP 1 055 509 in the present Applicant's name shows a method for manufacturing a studded tyre comprising the following steps: making a green tyre, inserting and securing the studs in specific seats in a curing mould comprising sectors, inserting the said green tyre in the said mould, closing the said mould, and opening the said mould to remove the said tyre once cured. The said studs are inserted in the said seats with a certain amount of play, allowing the cured tyre to be removed from the mould when the mould is opened, so that the studs do not interfere with the sectors of the mould and so that their essentially perpendicular position relative to the outer surface of the tread band is not affected.

As another example, document US 3237670 - A describes a method of manufacturing studded tyres according to the preamble of claim 1 of the present application.

The Applicant has found that although the methods indicated above result in a more efficient procedure for manufacturing studded tyres and produce a product with more homogeneous characteristics and greater reliability in use, they have some drawbacks.

Specifically, the process of inserting the studs in the curing mould is performed manually in between one curing process and the next. Since the mould has a residual temperature of at least 80-90 degrees centigrade, there are many practical problems with manual insertion, especially because the operation is time-consuming and laborious (at least 10-15 minutes).

Moreover, this process of manual stud insertion involves an unproductive period for the mould which, in addition, steadily cools down during this process, necessitating a greater consumption of energy and a longer period of time to complete the next cure, as compared with the consumption and time required for a mould already at temperature.

The Applicant realized that if the process of inserting the studs is done automatically or semi-automatically, this can lead to considerable advantages both for worker safety and for the efficiency of the production method.

The Applicant has found that if, during the process of inserting the studs into the mould, a stud-holding device is used that is capable, once placed inside the said mould, of releasing a plurality of studs within a very short space of time into corresponding seats within the mould, minimal time is required for this process, which is no longer performed manually by the workers involved.

In a first aspect, the present invention relates to a method for manufacturing a studded tyre comprising a tread band with a radially outer surface containing a plurality of metal studs partially projecting from the said outer surface, comprising the following steps: manufacturing a green tyre; inserting the said studs into seats in a curing mould; inserting the said green tyre in the said mould; closing the said mould; curing the said green tyre; and opening the said mould to extract a cured tyre; the said method being characterized in that the said step of inserting studs into the seats of the said mould is performed by placing a stud-holding device supporting a plurality of the said studs inside the said mould and expelling the said studs from the said stud-holding device so as to locate them in the said seats.

The method of the present invention eliminates the step of inserting the studs manually into the open mould. The studs are inserted in a simple and practical manner on a stud-holding device during the preceding curing of another tyre. This achieves a further considerable reduction in time and energy consumption for the next cure, because the mould is only very briefly inactive when the studs are being inserted into it, and consequently does not waste heat. To this is also added an obvious advantage in terms of quality of the working environment.

In a preferred embodiment of the said method, the said studs are expelled by actuating the said stud-holding device.

In a different, preferred embodiment of the said method, during the said insertion step, the said stud-holding device is placed in the said mould in such a way that each stud present in the said stud-holding device has a position in radial alignment with the corresponding seat provided in the said mould.

In another preferred embodiment, actuating the said stud-holding device produces an outward radial force on the said plurality of studs such as to locate them in the said seats provided in the said mould.

Advantageously, in another embodiment of the present method, between two successive cures carried out by the same mould, a number of studs less than the number of seats present on the said stud-holding device is inserted in the said stud-holding device.

In another embodiment, the said stud-holding device is located centrally in the said mould by a centring rod inserted in a seat provided on the said mould.

In another embodiment of the said method, the said stud-holding device is actuated by turning at least one lever connected to at least one roller brought into contact with a plurality of pusher devices, each corresponding to a stud.

In a preferred embodiment of the method in question, the step of opening the mould after curing is such that the studs embedded in the tread band of the cured tyre remain approximately perpendicular to the radially outer surface of the said tread band.

In a second aspect, the invention relates to a stud-holding device suitable for placing in a curing mould for making a studded tyre, characterized in that it comprises a toroidal body, the said body possessing a number of through holes capable of taking studs and an expulsion mechanism of said studs in a substantially radial outward direction.

The said toroidal body preferably has dimensions roughly similar to those of a cured tyre.

In one particular embodiment, there are fewer through holes than there are seats in the said mould.

In a preferred embodiment, the said mechanism comprises at least one lever connected to at least one roller in such a way that a rotation of the said lever corresponds to a similar angular movement of the spindle of the said roller.

In another embodiment, the said through holes contain a pusher device for transmitting to the said stud inserted therein the thrust originated by the said mechanism.

In another embodiment, the said pusher device comprises a piston possessing a cap in a radially inward position designed for contact with the said roller, a shank connected to the said cap, and a head designed for contact with the said stud.

Other features and advantages of the invention will become clearer in the course of the detailed description of a preferred, but not exclusive embodiment of a method for manufacturing a studded tyre according to the present invention.

This description will now be set out below with reference to the attached drawings, which are supplied purely by way of indication and are therefore not restrictive. In the drawings:
Fig. 1 is a cross section through a studded tyre produced by the present method;
Fig. 2 is a cross section through a sector of a curing mould adapted for use in the method according to the invention;
Fig. 3 is a perspective view of a first embodiment of a stud-holding device used in the present method;
Fig. 4 is a vertical section through the stud-holding device illustrated in Fig. 3 and of the mould in which it is inserted (showing the mould sectors radially advanced);
Fig. 5 is a partial perspective view of the same stud-holding device and of the mould during insertion of studs into the latter;
Fig. 6 shows a top view of a second embodiment of the abovementioned stud-holding device connected to a curing mould; and
Fig. 7 is a partial vertical section through a detail of the abovementioned stud-holding device.

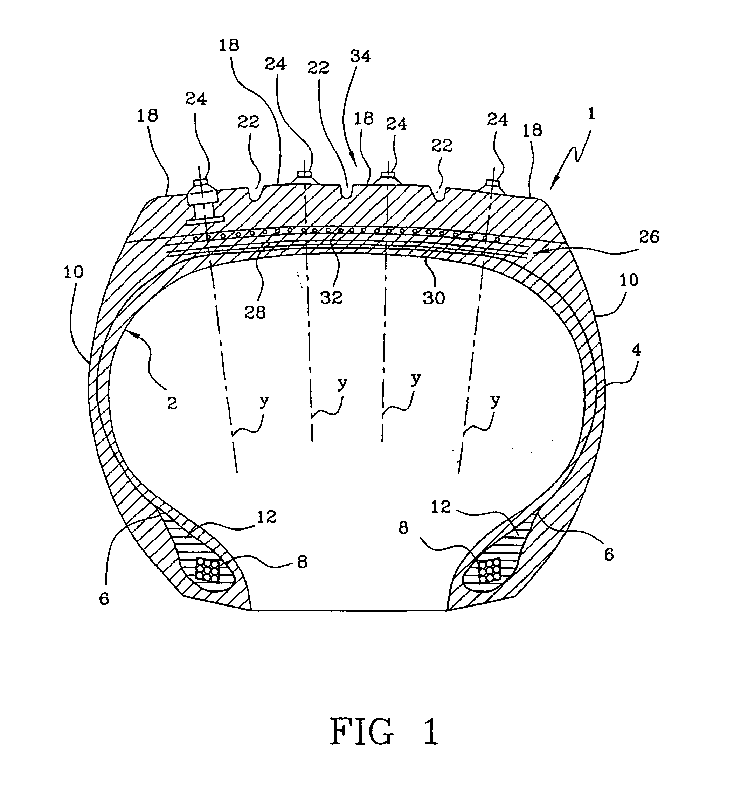

Referring to Figure 1, the number 1 is a general indication for a studded tyre produced by the method according to the present invention.

The tyre 1, which is torus-shaped, comprises a carcass structure 2 made up of at least one carcass ply 4, reinforced with textile or metal cords, whose ends 6 are each attached to a circumferential annular core, the latter preferably being metallic and referred to below as a reinforcing bead wire 8, on the radially outer surface of which bead wire is a rubber filler 12. As is known, the area of the tyre comprising the bead wire 8 and the filler 12 forms the bead, whose purpose is to anchor the tyre 1 to a corresponding mounting rim, not shown.

In the present case, the tyre 1 comprises a belt structure 26 which is radially external to the carcass structure 2. The latter extends roughly from one side wall of the tyre to the other and comprises at least two radially superimposed strips 28 and 30 having reinforcing textile or metal cords parallel with each other in each layer but lying at an angle with those of the adjacent layer and with respect to the equatorial plane of the tyre. In addition, the belt structure 26 also includes a radially outermost strip 32 possessing reinforcing textile or metal cords lying at an angle of 0°, that is in the circumferential direction of the tyre.

The radially outer surface of the said tyre 1 consists of a tread band 34 designed for the rolling contact of the tyre on the ground. It has a relief design comprising grooves 22 formed within the thickness of the said band to define a plurality of blocks and/or ribs 18. The combination of these structural elements, in various configurations, generates different tread patterns, generally optimized for the different forms of use of the tyre.

A series of studs 24 are inserted, as will be explained later, in the said tread band 34 to prevent skidding. Figure 1 shows some of these with only the part projecting from the outer surface of the tread band 34 visible, as well as the whole body of one of them. It can be seen that, owing to the curvature of the outer surface of the tread band, the studs 24, perpendicular to the said surface, are not parallel with each other but lie on axes y converging radially towards the middle of the tyre.

To carry out the present method, it is preferable to use a curing mould of the type described in the abovementioned European patent application EP 1 055 509 filed by the present Applicant.

More precisely, the mould used is of the centripetal type comprising two annular side portions, referred to as cheeks (not shown), which are coaxially opposed and move axially towards and away from each other, and substantially correspond to the side walls of the said tyre. Between these cheeks is a central annular portion comprising a plurality of sectors (usually varying from 4 to 10 in number) arranged circumferentially about the axis of the mould and able to move radially in both directions perpendicular to the said axis. These sectors are designed to operate on the tread band of the tyre on which they define a so-called tread pattern: for this purpose they are provided, on their inside surfaces designed to come into contact with the tread band, with surface reliefs that intersect each other in varying ways to generate longitudinal and/or transverse grooves defining ribs and/or blocks.

As regards the cheeks, if relief portions are to be formed on the side walls of the tyre, e.g. to define graphical identifying symbols on the tyre itself (trade mark, tyre size or other indications), these cheeks are usually provided with corresponding cavities so as to generate the said relief portions.

In accordance with the present invention, the mould for a studded tyre, like that shown in Figure 1, has a series of holes (around 200/400) preformed in the sectors of the mould. Suitable devices are fitted in the holes to hold the studs 24 in the right positions during curing, which is when the studs are embedded in the compound of the tread 34.

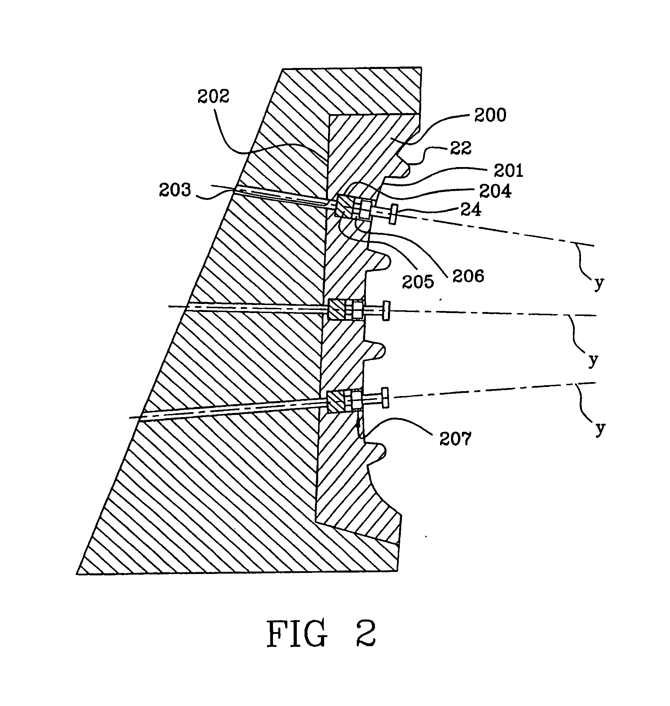

Figure 2 shows a cross section of a sector of the said centripetal mould. Reference number 200 indicates the cross section of the die, i.e. the interchangeable portion within the sectors that moulds the relief design into the tread band.

Reference 201 indicates the inner surface of the die 200 and reference 202 its outer surface.

The die 200, which is preferably aluminium, contains a plurality of through holes, each having a first portion 203 running in from the outer surface 202, with a first bore diameter (e.g. 5 mm) and a second portion 204 running in from the inner surface 201, with a second bore diameter (e.g. 10 mm) greater than the first diameter.

Into the second portion 204 is placed a cylindrical magnet 205 whose diameter is approximately equal to that of the hole (e.g. 10 mm) and whose height is between 5 mm and 10 mm, preferably 5 mm.

The magnet 205 is placed up against the surface resulting from the change in diameter of the through hole between the first portion 203 and the second portion 204.

A bush 206, which is preferably made of non-magnetizable stainless steel, is then inserted into the second portion 204.

The diameter of the bush 206 is equal to that of the said second portion 204 of the through hole so that, once inserted, it is held fast inside the second portion 204 by interference close to the said magnet 205; it also forms a seat 207, the shape of which is essentially complementary to that of the portion of the said stud 24 which will be housed inside it during the curing process.

To carry out the method according to the invention, a special tool or device 300 is used to hold a number of studs 24 equal to or less than the number of the said seats 207 present in the mould.

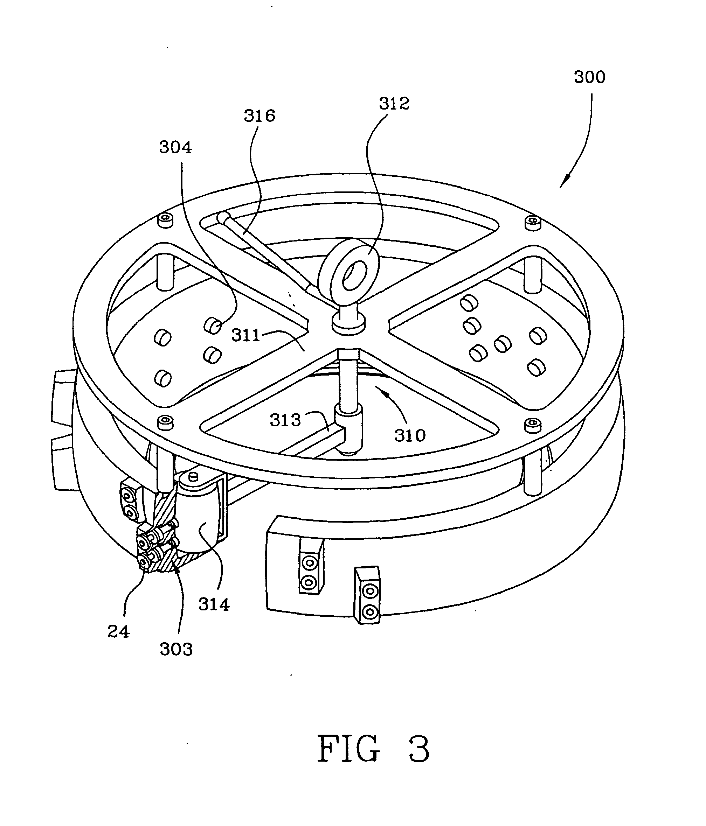

More precisely, as illustrated in Figures 3 to 6, the said stud-holding device 300 is preferably a torus shape roughly the same as that of the moulded and cured tyre.

The said stud-holding device 300 may for example be made by casting a synthetic material and then machining it with machine tools to form all the geometrical and structural features described below.

The toroidal body of the said stud-holding device 300 advantageously includes a number of through holes 301 that is equal to or less than the number of seats 207 present in the said mould for holding the studs 24 during the curing process.

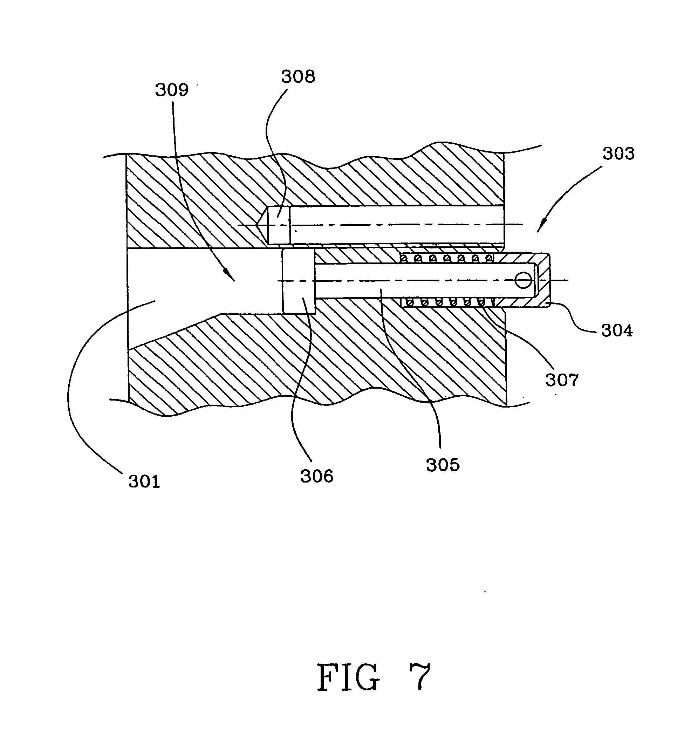

In each of the said holes 301, in a radially inward position, is a pusher device, such as a spring-loaded piston 303 (Fig. 7) or an equivalent device which, as will be explained later, will push the associated stud 24 in a radially outward direction during the insertion of the said stud 24 into the mould. More precisely, the said piston 303 comprises, when assembled on the said stud-holding device 300, a cap 304 in a radially inward position and preferably made of brass, the said cap being connected to one end of a shank 305 which is preferably made of aluminium and has a head 306 in a radially outward position designed to impact the said stud 24. Also connected to the body of the shank 305 is a spring 307 for returning the piston 303 to the rest position after it has performed its pushing function.

A magnet 308 is advantageously provided in a position that is radially more external than the said head 306 in the rest position, and axially more external or more internal than the said hole 301, so as to exert an attractive force on the stud 24, placed, as will be explained later, close to the said head 306, sufficient to keep it in position.

In a radially more external position, the said hole 301 also flares out to allow removal of an undercut following the said casting; the basically cylindrical wall of the said hole 301 in the said radially more external portion and the said head 306 define a seat 309 in which to house a stud 24.

The said stud-holding device 300 is surmounted axially, as illustrated in Figures 3 to 6, by a mechanism 310 that makes it possible to exert pressure in sequence on the radially inward ends of each piston 303.

The said mechanism 310 preferably comprises a plurality of attachment bars 311, numbering four for example, arranged radially at angles of approximately 90 degrees with respect to each other. The bars are preferably made of aluminium alloy. At their point of intersection, i.e. along the axis of the said stud-holding device 300, is a handling means, such as a hook 312, for handling the said stud-holding device.

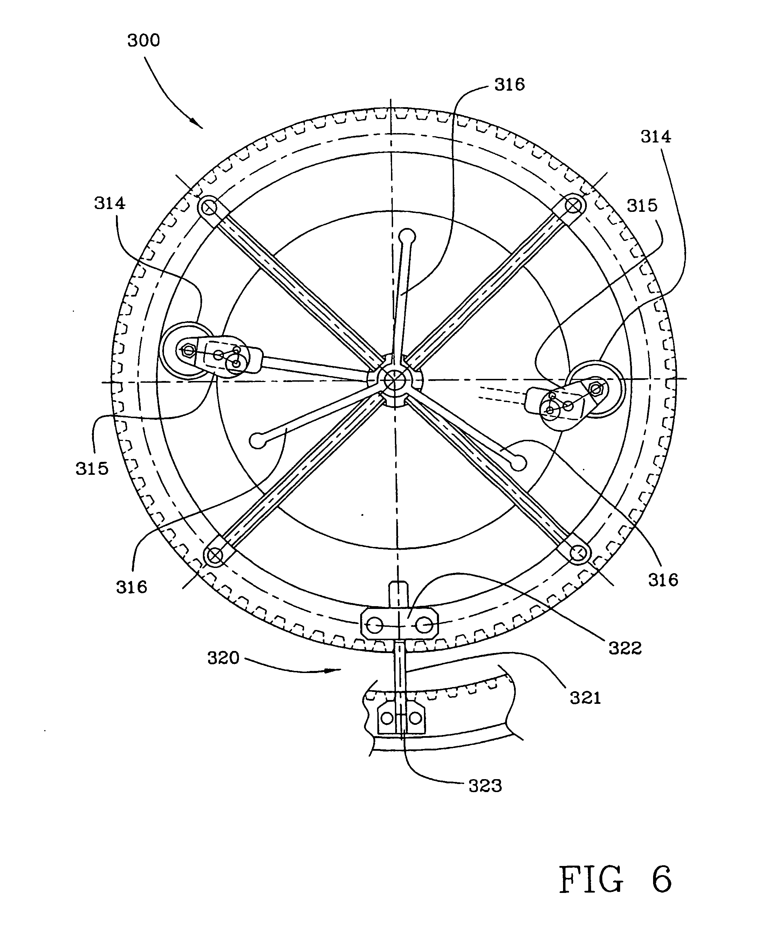

The abovementioned attachment bars 311 support, preferably in the vicinity of the abovementioned point of intersection, a rotating beam 313 carrying at its free end at least one roller 314, preferably made of PTFE, designed to make contact with the radially inward ends of the said pistons 303, that is with the brass caps 304 of the latter. The said roller 314 is preferably connected to the said rotating beam 313 by a bracket 315 hinged to this beam. Rotation of the said bracket 315 about its hinge point connecting it to the said rotating beam 313 advantageously allows the roller 314 to move into or out of contact with the said caps 304. More exactly, if the straight line joining the point of intersection between the axis of the roller 314 and the bracket 315 to the said hinge point on the bracket 315 forms an angle of 0 degrees with the radial direction of the rotating beam 313, the roller 314 will be in its radially outermost position and in contact with the said caps 304; whereas if the said angle is other than 0 degrees, for example 45 degrees, the roller 314 will be in a radially more inward position (see Fig. 6) and not in contact with the said caps 304.

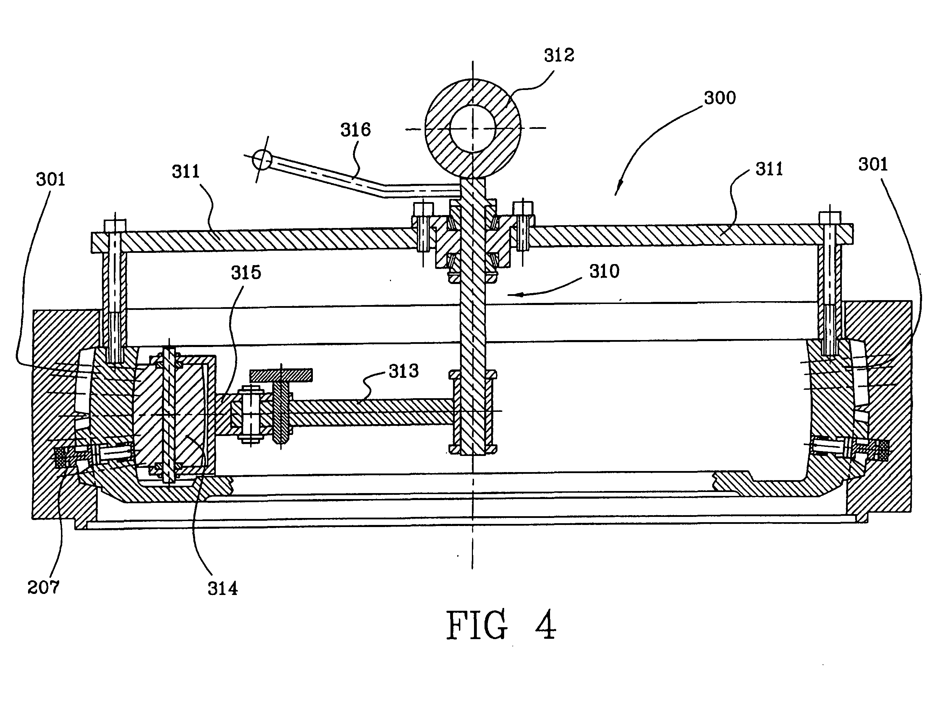

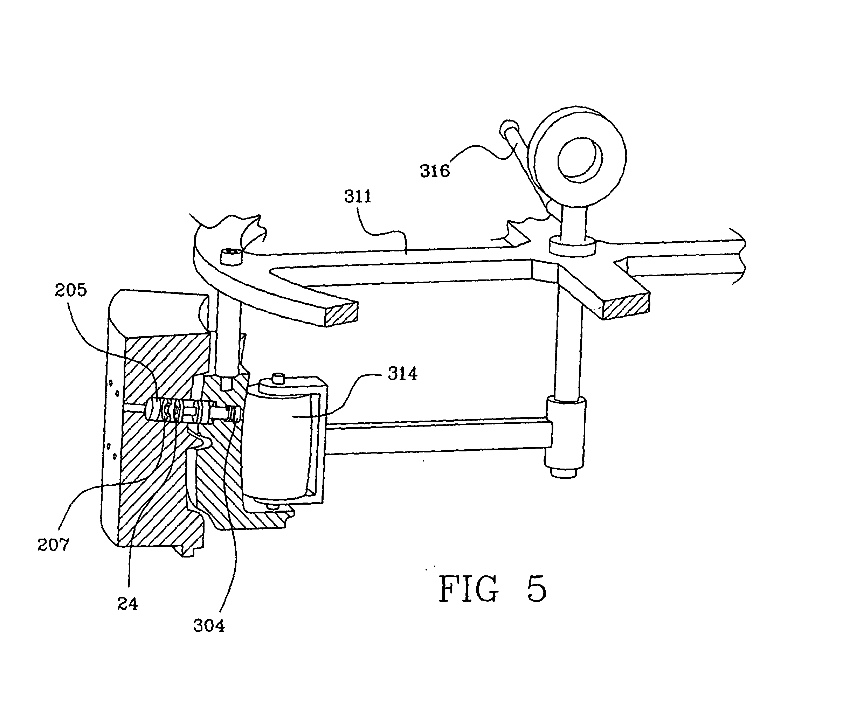

Circumferential movement of the rotating beam 313 and consequently of the roller 314 is provided by one or more angularly staggered coplanar levers 316 (see Figures 5 and 6) which are axially further out than the four attachment bars 311. As shown in Figures 4, 5 and 6, the said levers 316 are connected, preferably by a shaft along the axis of the stud-holding device 300 to the said rotating beam 313, so that any rotation by them about the said axis causes a corresponding rotational movement of the said rotating beam 313 about the same axis.

The stud-holding device 300 may also include a centring mechanism 320 for defining its position with respect to that of the said curing mould during the insertion of the studs 24 into the mould.

The said centring mechanism 320 comprises, for example, a centring rod 321 connected mechanically to the toroidal body of the said stud-holding device 300, for example by a bracket 322, which allows it to move radially due to the elasticity of a spring (not shown in the figures). The said rod 321 is designed to fit into a special seat 323 provided in the mould before the studs 24 are inserted, as will be explained below. Advantageously, the position adopted by the stud-holding device 300 within the mould, when the rod 321 is inserted in the seat 323, is such that each stud 24 placed in the said seat 309 is in radial alignment with the corresponding seat 207 in the die 200 of the said mould.

Studs 24 that can be used in the method according to the invention may be, for example, those described in the abovementioned document EP 1 055 509 filed by the present Applicant.

These basically have a central body consisting of a rigid component, preferably made of steel or other ferromagnetic metallic material (such as CF17 SMnPb10, UNI 4838/90).

The said stud 24 has a cylindrical, or more preferably tapered end designed to project from the radially outer surface of the tread band. This end may also conveniently be fitted with a tip of hard metal, such as tungsten carbide, inserted in the body of the stud 24 for increased grip on snow-covered and/or icy surfaces.

At the opposite end from the said tip, the stud 24 comprises a preferably circular base whose diameter is greater than any other diameter of the said central body. The part of the stud 24 lying between the tip and the base may include along its axial length one or more annular ridges approximately equal in diameter to the diameter of the base, in order to improve the adhesion of the stud 24 within the tread band.

After being cleaned, for example by sand blasting and/or phosphating, the stud 24 is treated before use with a binding agent, preferably by immersion, to greatly increase the adhesion between the compound of the tread band and the external surface of the stud during curing of the tyre.

The method according to the invention comprises a plurality of successive steps.

A green tyre is first manufactured. Then, after a plurality of studs 24 have been inserted in the seats 207 provided in the said mould, the said green tyre is inserted in the said mould. The latter is then closed and the said tyre is moulded and cured. The mould is then opened and the cured tyre removed with the said moulded tread band 34 containing the said plurality of studs 24.

The studs 24 embedded in the tread band 34 of the cured tyre advantageously do not slide against the walls of the said seats 207 during removal from the mould, as they remain more or less perpendicular to the radially outer surface of the said tread band 34, thus avoiding problems both for the mould and for the integrity of the tyre itself. This happens because each stud 24 has a predetermined amount of play within its own seat 207 inside the mould, sufficient to allow this stud to undergo movements of its own axis relative to the axis of the seat. In other words this enables the sector of the mould to withdraw off the stud as the mould is being opened, by a movement in an inclined direction with respect to the axis of the stud 24. The stud is therefore not subject to bending forces, or to traction by friction with the wall of the bush 206, and as a consequence the interface of attachment between the compound of the tread band 34 and the surface of the stud is not stressed.

The step in which the said studs 24 are inserted into the said mould is performed according to the invention in a series of substeps as indicated below.

The said stud-holding device 300 is loaded with a plurality of studs 24 while preferably suspended off the ground by means of the hook 312, to facilitate the work of the operators who insert, for example manually, the plurality of studs 24 (around 200/400) into the corresponding seats 309 present in the radially outer surface of the said stud-holding device 300. The magnets 308 act in conjunction with the said seats to hold the studs in position as soon as they are loaded. Depending on the type of tyre to be produced, the number of studs 24 inserted into the said stud-holding device 300 by the staff is equal to or less than the number of seats 309 present in the device.

Next, the said stud-holding device 300 is inserted, handling it with the hook 312, inside the mould, which has just been opened, for example to remove a freshly cured tyre. The stud-holding device 300 is then secured to the mould by means of the centring rod 321 which is housed in the seat 323 provided in the said mould. In this way, as already indicated, the (radially outermost) tip of each stud 24 will be in radial alignment with the corresponding seat 207 in the die 200 of the said mould.

The operators then check that the roller 314 is inserted, that is to say they adjust the angular position of the bracket 315 as explained earlier, so that the roller 314 can contact the radially inward ends of the pistons 303, that is the caps 304.

With the stud-holding device 300 fixed in the centre of the mould, the sectors of the latter can be moved in with a radial movement and then, by acting on the lever or levers 316, the roller 314 is turned and, by applying pressure to the said caps 304, the roller produces a radial movement of the heads 306 of the pistons 303, which expel the studs 24 connected to them in a radially outward direction. Simultaneously, each magnet 205 located in a radially outward position relative to the seat 207 exerts an attractive force on the corresponding studs 24 expelled from the said stud-holding device 300. Each stud 24 thus ends up in the corresponding seat 207 in the mould which, as mentioned earlier, is of a complementary shape to that of the tip of the said stud 24, while each magnet 205 continues to exert its attractive force and hold the corresponding stud 24 in position throughout the subsequent steps. Once the roller 314 has completed its action on each piston 303, the spring 307 returns the cap 304 to position. When the roller has covered the entire radially inner surface of the device 300, that is when the levers 316 have completed one 360 degree revolution (and this preferably takes place in a few seconds), all the studs 24 will be inside the said mould.

At this point the sectors of the mould are opened again to allow the stud-holding device 300 to be withdrawn. A green tyre is then placed in the mould, the mould is closed and the moulding and curing step begins. In the meantime the studs for the next cure are being inserted in the said stud-holding device 300.

At the end of curing, a studded tyre such as that explained above is removed from the abovementioned mould, which remains open and inactive only long enough for the studs 24 to be transferred from the said stud-holding device 300, which is already ready for use.

The method described above therefore solves the problems encountered in the prior art, avoiding both excessive down times in the use of the mould and safety problems for the workers.

## Claims

1. Method for manufacturing a studded tyre (1) comprising a tread band (34) with a radially outer surface containing a plurality of metal studs (24) partially projecting from the said outer surface, comprising the following steps: manufacturing a green tyre; inserting the said studs (24) into seats (207) in a curing mould; inserting the said green tyre in the said mould; closing the said mould; curing the said green tyre; and opening the said mould to extract a cured tyre; the said method being **characterized in that** the said step of inserting studs (24) into the seats (207) of the said mould is performed by placing a stud-holding device (300) supporting a plurality of the said studs (24) inside the said mould and expelling the said studs (24) from the said stud-holding device (300) so as to locate them in the said seats (207).

2. Method for manufacturing a studded tyre according to Claim 1, wherein the said studs (24) are expelled by actuating the said stud-holding device (300).

3. Method for manufacturing a studded tyre according to Claim 1, wherein during the said insertion step, the said stud-holding device (300) is placed in the said mould in such a way that each stud (24) present in the said stud-holding device (300) has a position in radial alignment with the corresponding seat (207) provided in the said mould.

4. Method for manufacturing a studded tyre according to Claim 2, wherein actuating the said stud-holding device (300) produces an outward radial force on the said plurality of studs (24) such as to locate them in the said seats (207) provided in the said mould.

5. Method for manufacturing a studded tyre according to Claim 1, wherein, between two successive cures carried out by the same mould, a number of studs (24) less than the number of seats (309) present on the said stud-holding device (300) is inserted in the said stud-holding device (300).

6. Method for manufacturing a studded tyre according to Claim 1, wherein the said stud-holding device (300) is located centrally in the said mould by a centring rod (321) inserted in a seat (323) provided on the said mould.

7. Method for manufacturing a studded tyre according to Claim 2, wherein the said stud-holding device (300) is actuated by turning at least one lever (316) connected to at least one roller (314) that is brought into contact with a plurality of pusher devices (303), each corresponding to a stud (24).

8. Method for manufacturing a studded tyre according to Claim 1, wherein during the step of opening the said mould after curing, the studs (24) embedded in the tread band (34) of the cured tyre remain approximately perpendicular to the radially outer surface of the said tread band (34).

9. Stud-holding device (300) suitable for placing in a curing mould for making a studded tyre (1), **characterized in that** it comprises a toroidal body, the said body possessing a number of through holes (301) capable of taking studs (24) and an expulsion mechanism (310) of said studs (24) in a substantially radial outward direction.

10. Stud-holding device according to Claim 9, wherein the said toroidal body is of roughly similar dimensions to those of a cured tyre.

11. Stud-holding device according to Claim 9, wherein there are fewer through holes (301) than there are seats (207) in the said mould.

12. Stud-holding device according to Claim 9, wherein the said mechanism (310) comprises at least one lever (316) connected to at least one roller (314) in such a way that a rotation of the said lever (316) corresponds to a similar angular movement of the spindle of the said roller (314).

13. Stud-holding device according to Claim 12, wherein the said through holes (301) contain a pusher device for transmitting to the said stud (24) inserted therein the thrust originated by the said mechanism (310).

14. Stud-holding device according to Claim 13, wherein the said pusher device comprises a piston (303) possessing a cap (304) in a radially inward position designed for contact with the said roller (314), a shank (305) connected to the said cap, and a head (306) designed for contact with the said stud (24).

## Patentansprüche

1. Verfahren zur Herstellung eines Spike-Reifens (1), der ein Laufflächenband (34) mit einer radial äußeren Fläche und mit einer Vielzahl von Spikes (24) aus Metall aufweist, die teilweise aus der äußeren Fläche vorstehen, wobei das Verfahren die folgenden Schritte aufweist:
- Herstellen eines Rohreifens,
- Einsetzen der Spikes (24) in Sitze (207) in einer Vulkanisierform,
- Einlegen des Rohreifens in die Form,
- Schließen der Form,
- Vulkanisieren des Rohreifens und
- Öffnen der Form zur Herausnahme eines vulkanisierten Reifens, und das Verfahren **dadurch gekennzeichnet ist,**
- **dass** der Schritt des Einsetzens von Spikes (24) in die Sitze (207) der Form ausgeführt wird, indem
-- eine Spikehaltevorrichtung (300), die eine Vielzahl der Spikes (24) trägt, in der Form angeordnet wird und
-- die Spikes (24) aus der Spikehaltevorrichtung (300) so ausgetrieben werden, dass sie in dem Sitz (207) positioniert werden.

2. Verfahren zur Herstellung eines Spike-Reifens nach Anspruch 1, bei welchem die Spikes (24) durch Betätigen der Spikehaltevorrichtung (300) ausgetrieben werden.

3. Verfahren zur Herstellung eines Spike-Reifens nach Anspruch 1, bei welchem während des Einsetzschritts die Spikehaltevorrichtung (300) in der Form so angeordnet wird, dass jeder in der Spikehaltevorrichtung (300) vorhandene Spike (24) eine Position in radial fluchtender Ausrichtung zu dem entsprechenden in der Form vorgesehenen Sitz (207) hat.

4. Verfahren zur Herstellung eines Spike-Reifens nach Anspruch 2, bei welchem das Betätigen der Spikehaltevorrichtung (300) eine radiale Auswärtskraft an der Vielzahl von Spikes (24) erzeugt, so dass sie in den in der Form vorgesehenen Sitzen (207) positioniert werden.

5. Verfahren zur Herstellung eines Spike-Reifens nach Anspruch 1, bei welchem zwischen zwei aufeinander folgenden, in der gleichen Form ausgeführten Vulkanisierungen eine Anzahl von Spikes (24), die kleiner ist als die Anzahl von in der Spikehaltevorrichtung (300) vorhandenen Sitzen (309), in die Spikehaltevorrichtung (300) eingesetzt wird

6. Verfahren zur Herstellung eines Spike-Reifens nach Anspruch 1, bei welchem die Spikehaltevorrichtung (300) zentral in der Form durch eine Zentrierstange (321) angeordnet wird, die in einen an der Form vorgesehenen Sitz (323) eingeführt wird.

7. Verfahren zur Herstellung eines Spike-Reifens nach Anspruch 2, bei welchem die Spikehaltevorrichtung (300) durch Drehen wenigstens eines Hebels (316) betätigt wird, der mit wenigstens einer Rolle (314) verbunden ist, die mit einer Vielzahl von Drückvorrichtungen (303) in Kontakt gebracht wird, von denen jede einem Spike (24) entspricht.

8. Verfahren zur Herstellung eines Spike-Reifens nach Anspruch 1, bei welchem während des Schritts des Öffnens der Form nach dem Vulkanisieren die in das Laufflächenband (34) des vulkanisierten Reifens eingebetteten Spikes (24) annähernd senkrecht zu der radial äußeren Fläche des Laufflächenbandes (34) bleiben.

9. Spikehaltevorrichtung (300) zum Anordnen in einer Vulkanisierform zur Herstellung eines Spikereifens (1), **dadurch gekennzeichnet, dass** sie einen torusförmigen Körper, der eine Anzahl von durchgehenden Löchern (301) besitzt, die Spikes (24) aufnehmen können, sowie einen Austreibmechanismus (310) für die Spikes (24) in einer im wesentlichen radialen Auswärtsrichtung aufweist.

10. Spikehaltevorrichtung nach Anspruch 9, bei welcher der torusförmige Körper grob ähnliche Abmessungen wie der vulkanisierte Reifen hat.

11. Spikehaltevorrichtung nach Anspruch 9, bei welcher weniger durchgehende Löcher (201) als Sitze (207) in der Form vorhanden sind.

12. Spikehaltevorrichtung nach Anspruch 9, bei welcher der Mechanismus (310) wenigstens einen Hebel (316) aufweist, der mit wenigstens einer Rolle (314) so verbunden ist, dass eine Drehung des Hebels (316) einer ähnlichen Winkelbewegung des Achszapfens der Rolle (314) entspricht.

13. Spikehaltevorrichtung nach Anspruch 12, bei welcher die durchgehenden Löcher (301) eine Drückvorrichtung zum Übertragen des durch den Mechanismus (310) erzeugten Drucks auf den darin eingesetzten Spike (24) enthalten.

14. Spikehaltevorrichtung nach Anspruch 13, bei welcher die Drückvorrichtung einen Kolben (303), der eine Kappe (304) in einer radial inneren Position besitzt, die für einen Kontakt mit der Rolle (314) ausgelegt ist, einen Schaft (305), der mit der Kappe verbunden ist, und einen Kopf (306) aufweist, der für den Kontakt mit dem Spike (24) ausgelegt ist.

## Revendications

1. Procédé de fabrication d'un pneu à crampons (1) comprenant une bande de roulement (34) avec un surface radialement extérieure contenant une pluralité de crampons métalliques (24) faisant partiellement saillie depuis ladite surface extérieure, comprenant les étapes suivantes consistant à : fabriquer un pneu cru ; insérer lesdits crampons (24) dans des sièges (207) dans un moule de durcissement ; insérer ledit pneu cru dans ledit moule ; fermer ledit moule ; durcir ledit pneu cru ; et ouvrir ledit moule pour extraire un pneu durci ; ledit procédé étant **caractérisé en ce que** ladite étape consistant à insérer des crampons (24) dans les sièges (207) dudit moule est réalisée en plaçant un dispositif de maintien de crampons (300) supportant une pluralité desdits crampons (24) à l'intérieur dudit moule et en expulsant lesdits crampons (24) dudit dispositif de maintien de crampons (300) de façon à les positionner dans lesdits sièges (207).

2. Procédé de fabrication d'un pneu à crampons selon la revendication 1, dans lequel lesdits crampons (24) sont expulsés en actionnant ledit dispositif de maintien de crampons (300).

3. Procédé de fabrication d'un pneu à crampons selon la revendication 1, dans lequel pendant ladite étape d'insertion, ledit dispositif de maintien de crampons (300) est placé dans ledit moule de telle manière que chaque crampon (24) présent dans ledit dispositif de maintien de crampons (300) a une position en alignement radial avec le siège (207) correspondant placé dans ledit moule.

4. Procédé de fabrication d'un pneu à crampons selon la revendication 2, dans lequel actionner ledit dispositif de maintien de crampons (300) produit une force radiale vers l'extérieur sur ladite pluralité de crampons (24) de façon à les positionner dans lesdits sièges (207) placés dans ledit moule.

5. Procédé de fabrication d'un pneu à crampons selon la revendication 1, dans lequel, entre deux durcissement successifs réalisé par le même moule, un certain nombre de crampons (24) inférieur au nombre de crampons (309) présents sur ledit dispositif de maintien de crampons (300) est inséré dans ledit dispositif dé maintien de crampons (300).

6. Procédé de fabrication d'un pneu à crampons selon la revendication 1, dans lequel ledit dispositif de maintien de crampons (300) est positionné centralement dans ledit moule par une tige de centrage (321) insérée dans un siège (323) placé sur ledit moule.

7. Procédé de fabrication d'un pneu à crampons selon la revendication 2, dans lequel ledit dispositif de maintien de crampons (300) est actionné en tournant au moins un levier (316) connecté à au moins un rouleau (314) qui est amené en contact avec une pluralité de dispositifs de poussoir (303), correspondant chacun à un crampon (24).

8. Procédé de fabrication d'un pneu à crampons selon la revendication 1, dans lequel pendant l'étape consistant à ouvrir ledit moule après durcissement, les crampons (24) enrobés dans la bande de roulement (34) du pneu durci restent approximativement perpendiculaires à la surface radialement extérieure de ladite bande de roulement (34).

9. Dispositif de maintien de crampons (300) convenant pour placer dans un moule de durcissement pour faire un pneu à crampons (1), **caractérisé en ce qu'**il comprend un corps toroïdal, ledit corps possédant un certain nombre de trous de passage (301) et un mécanisme d'expulsion (310) desdits crampons (24) dans une direction sensiblement radiale vers l'extérieur.

10. Dispositif de maintien de crampons selon la revendication 9, dans lequel ledit corps toroïdal est de dimensions grossièrement similaires à celle d'un pneu durci.

11. Dispositif de maintien de crampons selon la revendication 9, dans lequel il y a moins de trous de passage (301) qu'il y a de sièges (207) dans ledit moule.

12. Dispositif de maintien de crampons selon la revendication 9, dans lequel ledit mécanisme (310) comprend au moins un levier (316) connecté à au moins un rouleau (314) de telle manière qu'une rotation dudit levier (316) correspond à un mouvement angulaire similaire de l'axe dudit rouleau (314).

13. Dispositif de maintien de crampons selon la revendication 12, dans lequel lesdits trous de passage (301) contiennent un dispositif de poussoir pour transmettre au dit crampon (24) inséré dedans la poussée imprimée par ledit mécanisme (310).

14. Dispositif de maintien de crampons selon la revendication 13, dans lequel ledit dispositif de poussée comprend un piston (303) possédant un bouchon (304) dans un position radialement vers l'intérieur conçu pour un contact avec ledit rouleau (314), une tige (305) connectée au dit bouchon, et une tête (306) conçue pour le contact avec ledit crampon (24).
